# EUROPÄISCHE PATENTANMELDUNG

(11) **EP 0 635 666 A1**
(43) Veröffentlichungstag der Anmeldung: **25.01.1995**
(21) Anmeldenummer: 94111389.6
(22) Anmeldetag: 21.07.1994
(51) Int. Cl.: F16L 5/10

(54) **Anordnung zur wärmedichten Wanddurchführung eines Rohres o. dgl.**

(30) Priorität: 21.07.1993 DE 9310882 U
(71) Anmelder: KKW Kulmbacher Klimageräte-Werk GmbH, D-95326 Kulmbach (DE)
(72) Erfinder: Asperger, Lutz, Dr., D-92637 Weiden (DE); Kaim, Leo, D-96342 Stockheim (DE)
(74) Vertreter: Zenz, Joachim Klaus, Dipl.-Ing.

(57) **Zusammenfassung**

Das Heizkörperrohr (3) ist durch eine Öffnung (2) in der Wand (1) eines Heizgerätes hindurchgeführt, wobei die Öffnung das Heizkörperrohr mit Abstand umgibt. Das Rohr trägt eine Hülse (4), die in die Öffnung eingepreßt wird und an ihrem einen Ende mit dem Rohr über eine Quetschverbindung (9) kraftschlüssig verbunden ist. Ferner trägt die Hülse an ihrem freien Ende einen nach außen gerichteten Flansch (6) der in eine Vertiefung (7) der wärmedämmenden Wand (1) hineinpaßt.

## Beschreibung

Die Erfindung betrifft eine Anordnung zur wärmedichten Durchführung eines Heizkörperrohres o. dgl. durch eine Öffnung in einer wärmedämmenden Wand eines Heizgerätes.

Die Wand des Heizgerätes ist einschichtig oder mehrschichtig aufgebaut und besteht zumindest teilweise aus wärmedämmendem Material, wodurch sie naturgemäß eine gewisse Dicke erhält. Bei der Durchführung von Heizkörperrohren, Temperaturfühlern und dgl. ist man bestrebt, die Wärmedämmung so wenig wie möglich zu beeinträchtigen. In der Praxis war es bisher üblich, ein Stück der Wärmedämmung flexibel auszuführen, z.B. aus Steinwolle, oder aber, bei nicht flexiblen Wärmedämmstoffen, das Heizkörperrohr o. dgl. spielfrei durch die Öffnung hindurchzustecken. Hierbei treten herstellungstechnische Schwierigkeiten auf, sobald mit unterschiedlichen Rohrdurchmessern gearbeitet werden muß. Diese Schwierigkeiten ergeben sich insbesondere bei der Durchführung von Heizkörperrohren durch nicht flexible Wärmedämmstoffe. Im Standardfall besitzen diese Rohre einen Durchmesser von 6,5mm. Sonderformen hingegen werden mit einem Durchmesser von 8,5mm gefertigt. Daher müssen bisher, sofern keine Spalte mit entsprechendem Wärmeverlust in Kauf genommen werden sollen, die wärmedämmenden Wände der Heizgeräte mit unterschiedlich großen Öffnungen versehen werden. Dies erschwert die Standardisierung der Fertigung und erhöht den Aufwand bei der Lagerhaltung.

Dementsprechend liegt der Erfindung die Aufgabe zugrunde, hier Abhilfe zu schaffen und die eingangs genannte Anordnung derart weiterzuentwickeln, daß unterschiedliche Bauformen mit vermindertem Herstellungs- und Lageraufwand bereitgestellt werden können, und zwar bei ausgezeichneter Wärmedichtigkeit.

Zur Lösung dieser Aufgabe ist die Anordnung nach der Erfindung dadurch gekennzeichnet, daß die Öffnung in der wärmedämmenden Wand das Heizkörperrohr mit Abstand umgibt und daß das Heizkörperrohr eine Hülse trägt, die im Endzustand in die Öffnung eingepreßt ist und an ihrem einen Ende mit dem Heizkörperrohr über eine Quetschverbindung kraftschlüssig verbunden ist.

Die Abmaße werden so gewählt, daß die Öffnung in der wärmedämmenden Wand und folglich auch die Hülse größer sind als der größte in Frage kommende Durchmesser der Heizkörperrohre. Öffnungsdurchmesser und Hülsengröße können also standardisiert werden. Die Anpassung an die unterschiedlichen Rohrdurchmesser erfolgt bei der kraftschlüssigen Montage der Hülse. Die hier vorgesehene Quetschverbindung paßt sich automatisch an große und kleine Rohrdurchmesser an. Von wesentlichem Vorteil ist, daß dabei auch beliebige Zwischengrößen von Heizkörperrohren problemlos erfaßt werden können. Die Hülse stellt einen Adapter dar, der kraftschlüssig sowohl mit dem Heizkörperrohr als auch mit der Wandöffnung in Verbindung steht und auf diese Weise die Wärmedämmung der Wand nur geringfügig beeinträchtigen kann.

Gegebenenfalls können die Hülsen bereits mit einem verjüngten Ende als Vorbereitung für die Quetschverbindung vorgefertigt werden. Dabei besteht dann die Möglichkeit, mehrere Standardgrößen für unterschiedliche Durchmesserbereiche bereitzustellen. Die Anpaßbarkeit der Hülsen an unterschiedliche Durchmesser hängt von dem Grad ihrer Verformbarkeit ab. Es wurde gefunden, daß eine Wandstärke der Hülsen von 0,5 mm sehr gute Quetschverbindungen über weiten Durchmesserbereichen bei ausreichender Festigkeit gewährleistet.

Die Vorteile der Erfindung ergeben sich nicht nur bei der Durchführung unterschiedlich dicker Heizkörperrohre, sondern auch bei andersartigen Durchführungen, beispielsweise von Temperaturfühlern o. dgl.. Sämtliche Durchführungen können auf diese Weise standardisiert werden, ohne daß auf Wärmedichtigkeit verzichtet werden muß.

Dadurch vereinfacht sich auch der Austausch von Wandelementen, der bisher in vielen Fällen Sonderanfertigungen erforderlich gemacht hat. Es genügt nun die Lagerhaltung von Standard-Bauteilen.

In wesentlicher Weiterbildung der Erfindung wird vorgeschlagen, daß die Hülse an ihrem freien Ende einen nach außen gerichteten Flansch trägt, der in einer Vertiefung der wärmedämmenden Wand liegt. Dadurch verbessert sich die Wärmedämmung der Durchführung. Auch ergibt sich eine Stabilisierung der Konstruktion. Fertigungstechnisch ist der zusätzliche Aufwand vernachlässigbar gering, da der Flansch ohne weiteres an die Hülse angeformt werden kann.

Vorzugsweise ist die Vertiefung in der Innenfläche der wärmedämmenden Wand angeordnet. Der Flansch der Hülse verhindert also bereits den Eintritt von Wärme in die Wandöffnung.

Eine besonders vorteilhafte Weiterbildung der Erfindung ist dadurch gekennzeichnet, daß die Öffnung einen der Innenfläche der wärmedämmenden Wand benachbarten zylindrischen Abschnitt aufweist, an den sich ein zur Außenfläche der Wand hin erweiterter Abschnitt anschließt, wobei die Hülse in den zylindrischen Abschnitt eingepreßt ist. Bei der Montage wird das Heizkörperrohr mit der aufgequetschten Hülse von innen nach außen in die Wandöffnung eingesteckt, wobei deren erweiterter Abschnitt diesen Vorgang erleichtert. Die im Durchmesser verminderte Quetschverbindung gewährleistet eine sichere Einführung des Hülsenendes in den zylindrischen Abschnitt der Öffnung, in den die Hülse anschließend eingepreßt wird, bis ihr Flansch sich in die Vertiefung der Wandinnenfläche einlegt.

Als erfindungswesentlich offenbart gelten auch solche Kombinationen der erfindungsgemäßen Merkmale, die von den vorstehend diskutierten Verknüpfungen abweichen.

Die Erfindung wird im folgenden anhand eines bevorzugten Ausführungsbeispiels im Zusammenhang mit der beiliegenden Zeichnung näher erläutert. Die Zeichnung zeigt in:
- Fig. 1: eine schematische Seitenansicht der Anordnung während der Montage;
- Fig. 2: in vergrößertem Maßstab einen Schnitt durch den linken Teil von Fig. 1.

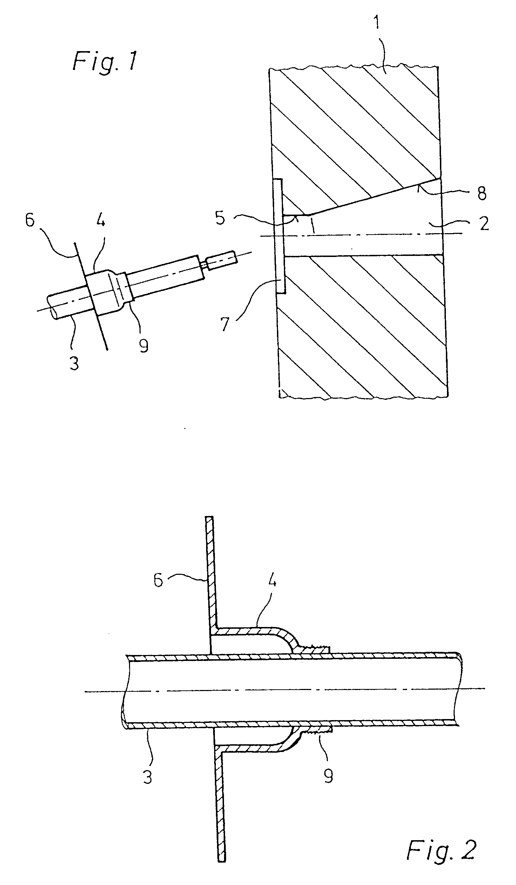

Nach Fig. 1 ist eine wärmedämmende Wand 1 eines Heizgerätes vorgesehen, die eine Öffnung 2 aufweist, durch die ein Heizkörperrohr 3 hindurchgeführt werden soll. Das Heizkörperrohr 3 trägt eine Hülse 4, die beim Einstecken in die Öffnung 2 in deren zylindrischen Abschnitt 5 eingepreßt wird. Gleichzeitig legt sich ein Flansch 6 der Hülse 4 in eine Vertiefung 7 hinein, die auf der Innenfläche der wärmedämmenden Wand vorgesehen ist. Die Montage der Anordnung erfolgt also vorzugsweise vom Innenraum des Heizgerätes aus. Erleichtert wird dieser Vorgang durch einen sich erweiternden Abschnitt 8 der Öffnung 2. In montiertem Zustand der Anordnung wird die Wärmedämmwirkung der Wand 1 nur geringfügig beeinträchtigt.

Fig. 2 zeigt, daß die Hülse 1 durch eine Quetschverbindung 9 kraftschlüssig mit dem Heizkörperrohr 3 verbunden ist. Diese Quetschverbindung bietet die Möglichkeit, die Hülse 4 für Heizkörperrohre 3 unterschiedlichen Durchmessers zu verwenden. Bei der Hülse 3 handelt es sich also um ein an die Öffnung 2 der wärmedämmenden Wand 1 angepaßtes Standard-Bauteil, welches die Montage von Heizkörperrohren mit unterschiedlichen Durchmessern ermöglicht.

Gleichermaßen eignet sich die Hülse 3 auch für die Durchführung anderer Leitungen oder Rohre sowie auch für Meßgeräte, beispielsweise Temperaturfühler.

Die Anordnung ist äußerst einfach und bringt eine wesentliche fertigungstechnische und auch lagerhaltungstechnische Vereinfachung mit sich, wenn es um die Wanddurchführung von Leitungen und Rohren unterschiedlicher Durchmesser geht.

Im Rahmen der Erfindung sind durchaus Abwandlungsmöglichkeiten gegeben. So kann ohne weiteres auf den sich erweiternden Abschnitt der Wandöffnung verzichtet werden. Auch kann der Flansch der Hülse samt zugehöriger Innenwandvertiefung entfallen, insbesondere bei Einsatz des größt-zulässigen Rohrdurchmessers. Ferner besteht die Möglichkeit, die Anordnung von der Außenseite des Heizgerätes aus zu montieren. Zwar ermöglicht die Schrumpfverbindung ein besonders problemloses Einführen der Hülse in die Wandöffnung, jedoch kann die Montage auch in umgekehrter Richtung erfolgen. Schließlich ist es nicht unbedingt erforderlich, daß die Hülse innerhalb der Wand endet. Die Schrumpfverbindung zwischen der Hülse und dem Heizkörperrohr kann ohne weiteres auch vor oder hinter der Wand liegen.

## Patentansprüche

1. Anordnung zur wärmedichten Durchführung eines Heizkörperrohres o. dgl. durch eine Öffnung in einer wärmedämmenden Wand eines Heizgerätes,
**dadurch gekennzeichnet,**
daß die Öffnung (2) das Heizkörperrohr (3) mit Abstand umgibt und daß das Heizkörperrohr eine Hülse (4) trägt, die in die Öffnung eingepreßt ist und an ihrem einen Ende mit dem Heizkörperrohr über eine Quetschverbindung (9) kraftschlüssig verbunden ist.

2. Anordnung nach Anspruch 1, dadurch gekennzeichnet, daß die Hülse (4) an ihrem freien Ende einen nach außen gerichteten Flansch (6) trägt, der in einer Vertiefung (7) der wärmedämmenden Wand (1) liegt.

3. Anordnung nach Anspruch 2, dadurch gekennzeichnet, daß die Vertiefung (7) in der Innenfläche der wärmedämmenden Wand (1) vorgesehen ist.

4. Anordnung nach einem der Ansprüche 1 bis 3, dadurch gekennzeichnet, daß die Öffnung (2) einen der Innenfläche der wärmedämmenden Wand (1) benachbarten zylindrischen Abschnitt (5) aufweist, an den sich ein zur Außenfläche der Wand hin erweiterter Abschnitt (8) anschließt, wobei die Hülse (4) in den zylindrischen Abschnitt (5) eingepreßt ist.
